# EUROPÄISCHE PATENTANMELDUNG

(11) **EP 1 363 177 A2**
(43) Veröffentlichungstag der Anmeldung: **19.11.2003**
(21) Anmeldenummer: 03009246.4
(22) Anmeldetag: 23.04.2003
(51) Int. Cl.: G05B 23/02

(54) **Verfahren zur Überwachung des Betriebs und/oder des Herstellungsprodukts einer industriellen Produktionsanlage**

(30) Priorität: 13.05.2002 DE 10221355
(71) Anmelder: SIEMENS AKTIENGESELLSCHAFT, 80333 München (DE)
(72) Erfinder: Heimke, Thomas, 91056 Erlangen (DE); Peuker, Thomas, Dr., 91083 Baiersdorf-Hagenau (DE)

(57) **Zusammenfassung**

Verfahren zur Überwachung des Betriebs und/oder des Herstellungsprodukts einer industriellen Produktionsanlage, insbesondere einer Anlage der Grundstoffindustrie, unter Verwendung wenigstens eines Beobachtungs-Softwaremittels, mit folgenden Schritten:
- zyklische Erfassung relevanter Betriebs- und/oder Produktdaten mittels des ersten Beobachtungs-Softwaremittel und Verarbeitung der Daten zur Erkennung eines betriebs- und/oder produktrelevanten Problemzustands,
- bei Vorliegen eines Problemzustands Übertragung der relevanten und gegebenenfalls weiterer vom Beobachtungs-Softwaremittel dann zu erfassender Betriebs- und/oder Produktdaten an wenigstens eine als Informationsquelle dienende anlagenexterne Recheneinrichtung, die oder mittels welcher anhand der übertragenen Betriebs- und/oder Produktdaten zustandsbezogene Informationsdaten ermittelt oder ermittelt werden,
- Übertragung der zustandsbezogenen Informationsdaten an wenigstens ein Reaktions-Softwaremittel,
- Analyse der Informationsdaten durch das Reaktions-Softwaremittel und Durchführung eines vom Analyseergebnis abhängigen Eingriffs in den Betriebsablauf zur Behebung des betriebs- und/oder produktbezogenen Problemzustands durch das Reaktions-Softwaremittel.

## Beschreibung

Verfahren zur Überwachung des Betriebs und/oder des Herstellungsprodukts einer industriellen Produktionsanlage

Die Erfindung betrifft ein Verfahren zur Überwachung des Betriebs und/oder des Herstellungsprodukts einer industriellen Produktionsanlage, insbesondere einer Anlage der Grundstoffindustrie, unter Verwendung wenigstens eines Beobachtungs-Softwaremittels.

In technischen Produktionsanlagen, vornehmlich der Grundstoffindustrie wie z.B. in Walzwerken, werden Produkte mit definierten Produktqualitäten produziert. Dabei ist es notwendig, die geforderten Produktqualitäten zu garantieren, um kontinuierlich hochqualitative Produkte herstellen zu können, ferner muss der technologische Prozess zu jeder Zeit beherrscht werden. Beide Aspekte sind im Zusammenhang mit dem erzielbaren Erlös für die Produkte und den anfallenden Produktionskosten zu sehen, weshalb es wichtig ist, mit vertretbarem Aufwand den technologischen Prozess und die Produktqualität zu beobachten und gegebenenfalls optimierend einzugreifen.

Ein Verfahren der eingangs genannten Art ist beispielsweise aus DE 199 30 660 A1 bekannt. Dort bedient man sich zur Überwachung der Anlage eines Beobachtungs-Softwaremittels in Form eines mobilen Programmcodes beziehungsweise verschiedener mobiler Programmcodes, die jeweils selbständig Anlagenteile, also z.B. spezifische Recheneinrichtungen oder Sensor- und Aktormittel, die vornehmlich programmgesteuert arbeiten und beispielsweise der Erfassung von Produktionsparameter dienen, überwachen. Hierdurch ist es möglich, besondere Ereignisse oder Fehler beziehungsweise allgemein Problemzustände erfassen zu können, die sich gegebenenfalls als nachteilig auf den Anlagenbetrieb beziehungsweise das herzustellende Produkt auswirken. Wird ein solches auslösendes Ereignis oder ein solcher Problemzustand erkannt, so werden von einem solchen mobilen Programmcode die relevanten Daten von der jeweils überwachten Einheit der Anlage oder aber des Produktes selbst (z.B. in Form spezifischer Produktparameter, die über ein Sensor- oder Aktormittel erfasst werden) gesammelt und sofort an eine anlagenexterne Auswerteeinrichtung gegeben. Diese Auswerteeinrichtung ist zweckmäßigerweise die Entwicklungszentrale, wo der erkannte Fehlerzustand begutachtet und ausgewertet wird.

Zwar lässt das hieraus entnehmbare Verfahren unter Verwendung der sogenannten "mobilen Agenten"-Technologie die Erfassung relevanter Problemzustände oder ein Handeln erfordernder Ereignisse im Anlagen- oder Produktionsbetrieb zu, jedoch bietet allein die Auswertung der ereignisbedingt an die Auswerteeinrichtung gelieferten Daten keine Garantie für eine sehr schnelle Fehlerbehebung, die zumeist ebenfalls nur manuell und mit relativ großem Zeitverzug vorgenommen wird.

Der Erfindung liegt das Problem zugrunde, ein Überwachungsverfahren anzugeben, das ein schnelles Reagieren bei Erfassung eines Problemzustandes zur Behebung des selben ermöglicht.

Zur Lösung dieses Problems ist ein Verfahren der eingangs genannten Art mit folgenden Schritten vorgesehen:
- zyklische Erfassung relevanter Betriebs- und/oder Produktdaten mittels des ersten Beobachtungs-Softwaremittels und Verarbeitung der Daten zur Erkennung eines betriebsund/oder produktrelevanten Problemzustands,
- bei Vorliegen eines Problemzustands die Übertragung der relevanten und gegebenenfalls weiterer vom Beobachtungs-Softwaremittel dann zu erfassender Betriebs- und/oder Produktdaten an wenigstens eine als Informationsquelle dienende anlagenexterne Recheneinrichtung, die oder mittels welcher anhand der übertragenen Betriebs- und/oder Produktdaten zustandsbezogene Informationsdaten ermittelt oder ermittelt werden,
- Übertragung der zustandsbezogenen Informationsdaten an wenigstens ein Reaktions-Softwaremittel,
- Analyse der Informationsdaten durch das Reaktions-Softwaremittel und Durchführung eines vom Analyseergebnis abhängigen Eingriffs in den Betriebsablauf zur Behebung des betriebs- und/oder produktbezogenen Problemzustands durch das Reaktions-Softwaremittel.

Die Erfindung geht davon aus, unter Verwendung wenigstens eines geeigneten Beobachtungs-Softwaremittels einen Problemzustand erfassen, wie dies in DE 199 30 660 A1 beschrieben ist, auf die hiermit ausdrücklich Bezug genommen wird und die in ihrem gesamten Offenbarungsgehalt insbesondere hinsichtlich der Verwendung mobiler Programmcodes beziehungsweise der mobilen Agenten-Technologie in die Offenbarung der vorliegenden Erfindung einbezogen wird. Als Problemzustand wird einerseits ein echter Störfall, andererseits auch jedwede andere Situation, die in irgendeiner Weise eine Auswirkung auf den Anlagenbetrieb oder das Produkt haben kann, und aus der für den zukünftigen Betrieb gegebenenfalls gelernt werden kann, verstanden. Wird nun über ein Beobachtungs-Softwaremittel ein solcher Problemzustand detektiert, so erfolgt die Übertragung der der Detektion zugrunde liegenden Daten sowie gegebenenfalls weiterer, für die nachfolgende Auswertung zusätzlich erforderlicher Betriebs- und/oder Produktdaten, die das Softwaremittel selbständig erfasst beziehungsweise die gegebenenfalls dem Softwaremittel von der jeweils überwachten Anlagenkomponente selbstständig gegeben werden.

Die Daten werden an eine anlagenexterne Recheneinrichtung gegeben, die zum einen als Auswerteeinrichtung dient und die Daten analysiert, die aber auch insbesondere als Informations- oder Know-how-Quelle dient. Diese Informationsquelle verfügt über ein möglichst großes Know-how, um anhand dessen zum einen die Analyse vorzunehmen, zum anderen aber auch relevante Informationsdaten zu generieren, die zustandsbezogen sind und zur Behebung des Problemzustands dienen. Man nutzt also eine externe "Intelligenz", um den von dem anlageninternen Beobachtungs-Softwaremittel erfassten Problemzustand auf Basis der relevanten Betriebs- und/oder Produktdaten beheben zu können. Dies wird ermöglicht durch die Kommunikation zwischen dem Softwaremittel und der anlagenexternen Recheneinrichtung. Aufgrund der Nutzung anlagenexternen Know-how's in Form der externen Recheneinrichtung, die über beliebig viel Know-how-Informationen verfügt, kann vorteilhaft die sehr schnelle Arbeitsweise des Beobachtungs-Softwaremittels zur Erkennung des Problemzustands sowie zur Sammlung der relevanten Daten genutzt werden, was aufgrund der Konfiguration des Softwaremittels z.B. in Form eines mobilen Agenten, bei dem es sich um einen relativ kleinen Programmcode handelt, vorteilhaft ist. Dieser Programmcode verfügt nur über eine relativ geringe "Intelligenz", das heißt, er ist selbstständig nicht in der Lage, auf hinreichendes Know-how zur Problemlösung zurückzugreifen. Dies ist letztlich auch nicht seine Aufgabe, vielmehr dient er der schnellen und zeitnahen Erfassung des Problemzustands. Die Nutzung externen Know-how's bietet die Möglichkeit, zum einen auf eine ungeheuere Informationsfülle zurückgreifen zu können, zum anderen die Möglichkeit, unterschiedlichste Know-how-Quellen einbinden zu können.

Das erfindungsgemäße Verfahren lässt ferner auf Basis der über die Know-how-Quelle(n) ermittelten Informationsdaten eine Reaktion zur Behebung des Problemzustandes über wenigstens ein Reaktions-Softwaremittel zu. Dieses Reaktions-Softwaremittel kann ebenfalls beispielsweise in Form eines mobilen Agenten, also eines kleineren Reaktions-Programmcodes ausgebildet sein. Diesem werden nun die Informationsdaten gegeben. Das Reaktions-Softwaremittel verfügt über eine hinreichende "Intelligenz", um die Informationsdaten analysieren zu können und um selbstständig zu entscheiden, ob und inwieweit in den Betriebsablauf eingegriffen wird. Hierbei ist unter "Eingriff in den Betriebsablauf" jedweder Eingriff in die Tätigkeit oder den Programmablauf eines beliebigen Anlagenteils zu verstehen, der über das Reaktions-Softwaremittel bearbeitbar ist. Beispielsweise kann über das Reaktions-Softwaremittel auf den Arbeitsbetrieb einer Rechnersteuerung eingegriffen werden, oder aber der Betrieb verschiedener Sensor- oder Aktormittel beeinflusst werden etc.

Insgesamt bietet das erfindungsgemäße Verfahren die Möglichkeit, zeitnah Fehler oder Problemzustände zu erkennen, auf Basis eines quasi unbegrenzten Know-how-Volumen der Problemlösung dienende, optimierte Informationsdaten zu ermitteln und umgehend wieder reagieren zu können, so dass sofort in den Anlagenbetrieb eingegriffen werden kann und die Produktqualität verbessert oder zumindest aufrechterhalten und der Prozess beherrscht werden kann, was insbesondere wirtschaftliche Vorteile bietet.

In Weiterbildung des erfindungsgemäßen Verfahrens kann vorgesehen sein, dass eine oder mehrere den Betrieb der Produktionsanlage steuernde Recheneinrichtungen und/oder ein oder mehrere im Rahmen des Betriebs tätige, vorzugsweise programmgesteuerte Sensor- oder Aktormittel mit einem oder verschiedenen Beobachtungs-Softwaremitteln zur Erfassung betriebsund/oder produktrelevanter Betriebs- und/oder Produktdaten überwacht werden. Es besteht also die Möglichkeit, beliebige Anlagenteile wie z.B. Steuerungsrechner oder Sensoren/Aktoren überwachen zu können. Insbesondere die Verwendung verschiedener Beobachtungs-Softwaremittel lässt ein paralleles Überwachen verschiedener Prozess- und Produktqualitätsaspekte zu. Daneben besteht natürlich auch die Möglichkeit, mehrere Beobachtungs-Softwaremittel für das gleiche Überwachungsgebiet einzusetzen, jedoch diesen Beobachtungs-Softwaremitteln unterschiedliche Überwachungsaufgaben beziehungsweise -inhalte aufzugeben oder die Überwachungsfunktion der verschiedenen Softwaremittel gegebenenfalls hierarchisch zu strukturieren. Als Beobachtungs-Softwaremittel wird zweckmäßigerweise ein mobiler Programmcode verwendet, wobei wir diesbezüglich auf die bereits genannte DE 199 30 660 A1 verweisen, wo bereits ein Überwachungsverfahren unter Verwendung solcher mobiler Programmcodemittel oder "mobiler Agenten" beschrieben ist. Ein mobiler Programmcode kann sich nach vorgegebenen Regeln selbst (d.h. ohne Benutzerinteraktion) im Rechnernetzwerk frei bewegen, um seine Analysen am Ort des Geschehens vorzunehmen, dort Daten zu sammeln oder sonst wie zu agieren. Er kann sich zu diesem Zweck selbst vervielfachen (klonen). Insbesondere zweckmäßig ist die Verwendung dieser mobilen Agenten-Technologie, weil sich solche mobile Agenten quasi frei in einem Netzwerk bewegen können und gegebenenfalls zur Generierung neuer mobiler Programmcodes ausgelegt sein können, sofern dies erforderlich ist. Ein solches Netzwerk liegt naturgemäß auch bei einer in Rede stehenden Produktionsanlage vor, da die relevanten Anlagenteile in der Regel über geeignete Kommunikationsverbindungen wie Bussysteme (z.B. Industrial-Ethernet-Bus oder Standard-Ethernet-Bus) miteinander verbunden sind und miteinander kommunizieren.

Neben der Überwachung geeigneter Rechnereinrichtungen oder verschiedener Sensor- und Aktormittel besteht auch die Möglichkeit, in deren Steuerungs- oder Arbeitsbetrieb unter Verwendung wenigstens eines Reaktions-Softwaremittels eingreifen zu können. Auch hier können verschiedene Reaktions-Softwaremittel verwendet werden, die gegebenenfalls separat mit Informationsdaten versorgt werden können. Das heißt, es ist auch hier - ähnlich wie beim parallelen Beobachten - ein paralleles Reagieren möglich, wenn mehrere Änderungen sehr schnell und zeitgleich vorzunehmen sind, um den Problemzustand beheben zu können. Dabei kann jedem Reaktions-Softwaremittel beispielsweise lediglich ein Anlagenelement, z.B. eine bestimmte Recheneinrichtung oder ein bestimmtes Sensor-/Aktormittel zugeordnet sein, alternativ dazu kann ein Reaktions-Softwaremittel mehrere derartige Anlagenkomponenten "bearbeiten", je nachdem wie ein solches Reaktions-Softwaremittel konfiguriert ist. Selbstverständlich können die verschiedenen Reaktions-Softwaremittel auch untereinander kommunizieren, so dass ein Reaktions-Softwaremittel gegebenenfalls ein anderes Reaktions-Softwaremittel zum Eingriff in einen bestimmten Betriebsablauf anstoßen kann. Auch hier können mobile Programmcodes als Softwaremittel verwendet werden.

Zweckmäßig ist es ferner, wenn der ermittelte Problemzustand und/oder die erfassten Betriebs- und/oder Produktdaten zumindest zum Teil von einem Beobachtungs-Softwaremittel an ein Reaktions-Softwaremittel gegeben werden, das diese Daten im Rahmen der Analyse der Informationsdaten berücksichtigt. Das Reaktions-Softwaremittel kennt also den Status quo des Problemzustands, also den Ausgangszustand und kann diesen in die Informationsdatenanalyse mit einbeziehen. Aufgrund der dem Reaktions-Softwaremittel eigenen "Intelligenz" kann dieses eine noch feinere Abwägung über die Verwendung der Zusatzinformation beziehungsweise der Informationsdaten beziehungsweise die Art und Weise der Verwendung dieser Daten vornehmen, der Entscheidungsprozess wird also noch spezifischer.

Die Ermittlung der Informationsdaten kann auf beliebige Weise erfolgen. Beispielsweise ist hierbei die Durchführung von Simulationsrechnungen auf Basis der Betriebs- und/oder Produktdaten zu nennen, ferner die Auswertung von Datenbankinformationen im Hinblick auf die Betriebs- und/oder Produktdaten der Gestalt, dass diese oder ein Teil davon z.B. mit Vergleichs- oder Kennwerten verglichen werden, und schließlich die Möglichkeit der Analyse der Betriebs- und/oder Produktdaten mittels eines Expertensystems. Diese Aufzählung ist lediglich exemplarisch, verwendet werden kann jedwede Know-how-Quelle sowie jedwede Möglichkeit der Informationsdatengewinnung auf Basis der erfassten Betriebs- und/oder Produktdaten. Hierfür ist es natürlich auch möglich, gegebenenfalls mehrere verschiedene Anlagen externer Recheneinrichtungen zu verwenden, wobei die Daten entweder an alle eingebundenen Recheneinrichtungen gehen, oder aber das Beobachtungs-Softwaremittel bereits eine gewisse Auswahl derjenigen Daten empfangenden Recheneinrichtungen vornimmt. Diese Recheneinrichtungen können an einer beliebigen anlagenexternen Position, z.B. in einer Zentrale, die gleichzeitig die Software- und damit die Know-how-Pflege vornimmt, positioniert sein, wobei die Kommunikation zwischen den einzelnen Softwaremitteln und den Recheneinrichtungen (es handelt sich hier um eine bidirektionale Kommunikation) vorzugsweise über das Internet erfolgt, jedoch sind auch andere Kommunikationsverbindungen (z.B. funkgestützt oder dergleichen) denkbar.

Neben der Übertragung der Betriebs- und/oder Produktdaten an eine anlagenexterne Recheneinrichtung kann es im Bedarfsfall ferner sehr zweckmäßig sein, wenn über ein Beobachtungs-Softwaremittel die Gabe einer Informationsmitteilung an eine externe Stelle und/oder Person bei Vorliegen eines erfassten Problemzustands veranlasst wird. Das heißt, das Beobachtungs-Softwaremittel schickt beispielsweise eine Alarmmitteilung an eine zuständige Stelle oder Person, um diese sofort über den erkannten Fehler zu informieren, so dass dort, sofern erforderlich, eine Reaktion eingeleitet werden kann. Die Informationsmitteilung kann, z.B. in Form einer über eine Kommunikationsverbindung geschickten SMS-Mitteilung (SMS = Short Message Service) oder einer e-Mail-Mitteilung, an ein entsprechendes Empfangsgerät erfolgen.

Wie die Möglichkeit besteht, über ein Beobachtungs-Softwaremittel entsprechende Informationsdaten an eine externe Stelle oder Person zu geben, besteht auch die Möglichkeit, über ein Reaktions-Softwaremittel die Gabe einer Informationsmitteilung an eine externe Stelle und/oder Person bei Vorliegen der Informationsdaten und/oder der von einem Beobachtungs-Softwaremittel gelieferten Betriebs- und/oder Produktdaten zu veranlassen. Das heißt, auch hier erfolgt eine Kommunikation nach Außen an eine verantwortliche Stelle/Person, die dann möglicherweise auch handelt. Hier ist die Versendung von z.B. SMS- oder e-Mail-Mitteilungen möglich.

Wie beschrieben können unterschiedlich strukturierte oder arbeitende Recheneinrichtungen und damit Informations- oder Know-how-Quellen verwendet werden. Beispielsweise kann im Falle einer Verwendung des erfindungsgemäßen Verfahrens in einem Walzwerk eine Analyse eines Gefüges eines gewalzten Bandes erstellt und die Daten von dem Beobachtungs-Softwaremittel aufgenommen und bei Erfassen eines Problemzustandes übertragen werden. An der anlagenexternen Recheneinrichtung werden diese Daten von einem Analysesoftwaremittel analysiert und in Abhängigkeit des Analyseergebnisses die Informationsdaten erzeugt und an ein Reaktions-Softwaremittel übertragen.

Weiterhin ist es zweckmäßig, übertragene Daten gleich welcher Art zu verschlüsseln und empfängerseitig zu entschlüsseln, um diesbezüglich Sicherheit zu haben.

Weitere Vorteile, Merkmale und Einzelheiten der Erfindung ergeben sich aus dem im Folgenden beschriebenen Ausführungsbeispiel sowie anhand der Zeichnungen. Dabei zeigen:
- Fig. 1: eine Prinzipskizze einer erfindungsgemäßen Produktionsanlage in Form einer Walzanlage,
- Fig. 2: eine Prinzipdarstellung zur Erläuterung des erfindungsgemäßen Datentransfers nach einer ersten Ausführungsform,
- Fig. 3: eine Prinzipdarstellung zur Erläuterung des erfindungsgemäßen Datentransfers nach einer zweiten Ausführungsform,
- Fig. 4: eine Prinzipdarstellung zur Erläuterung des erfindungsgemäßen Datentransfers nach einer dritten Ausführungsform.

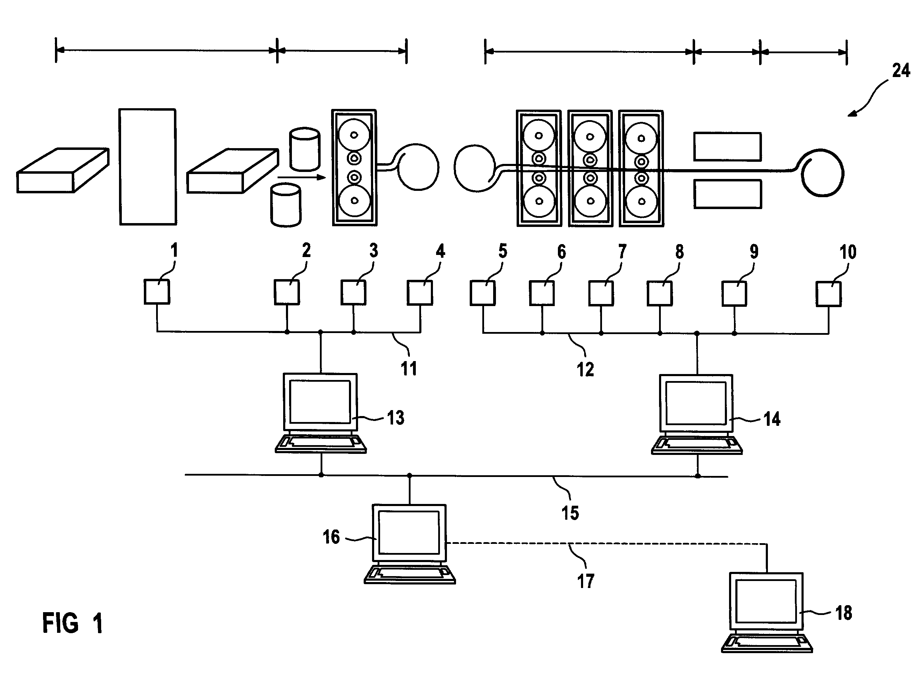

Fig. 1 zeigt in Form einer Prinzipskizze eine erfindungsgemäße Produktionsanlage 24, bei der es sich beispielsweise um eine Walzanlage handelt. Diese ist in fünf Anlagenbereiche unterteilt, nämlich den Anlagenbereich a (Ofen), den Anlagenbereich b (Vorstraße), den Anlagenbereich c (Fertigstraße), den Anlagenbereich d (Kühlstrecke) und den Anlagenbereich e (Coiler). Im Ofen wird eine zu walzende Bramme auf eine hinreichende Temperatur erwärmt, wonach in der Vorstraße ein erster Walzgang erfolgt. Das bereits teilgewalzte Vor-Band kann zunächst aufgehaspelt werden. Anschließend wird in der Fertigstraße das Vor-Band weiter gewalzt, bis es seine endgültige Dicke besitzt, wonach es gekühlt und gehaspelt wird. Die Qualität des Warmbandes hängt dabei von Geometrieparametern sowie von Materialeigenschaften ab. Als Geometrieparameter sind beispielsweise die Breite, die Dicke sowie das Profil beziehungsweise die Planheit zu nennen. Die Materialeigenschaften werden z.B. von der Zugfestigkeit und der Streckgrenze bestimmt. Die Materialeigenschaften sind eine Funktion des Gefüges des Metalls, das wiederum eine Funktion der Temperatur (Zeit) und der Umformung (Zeit) ist.

Ersichtlich sind der Anlage beziehungsweise den einzelnen Anlagenabschnitten eine Vielzahl von Sensor- oder Aktormitteln 1, 2, 3, 4, 5, 6, 7, 8, 9, 10 exemplarisch zugeordnet, über die entweder die Warmbandqualität bestimmende Parameter (z.B. Breite, Dicke etc.) erfasst werden, oder die zum Stellen der Walzgerüste etc. dienen. Den Abschnitt a und b sind im gezeigten Ausführungsbeispiel die Sensor- oder Aktormittel 1 - 4 zugeordnet, den Abschnitten c - e die Sensor- oder Aktormittel 5 - 10. Jede Sensor- oder Aktorgruppe kommuniziert über einen Datenbus 11, 12 mit einer Recheneinrichtung 13, 14, die im gezeigten Beispiel wiederum über einen Datenbus 15 mit einer zentralen steuernden Recheneinrichtung 16 kommuniziert. Die Recheneinrichtung 16 ihrerseits kann über eine beliebig ausgestaltete Kommunikationsverbindung 17, z.B. das Internet oder eine Funkstrecke oder dergleichen mit einer anlagenexternen Recheneinrichtung 18 birektional kommunizieren und Daten austauschen.

Innerhalb des exemplarisch gezeigten Netzwerks der Produktionsanlage 1, gebildet von den Sensor- oder Aktormitteln 1 - 10 sowie den Recheneinrichtungen 13, 14 und 16 arbeiten ein oder mehrere Beobachtungs-Softwaremittel sowie ein oder mehrere Reaktions-Softwaremittel, die hier nicht näher dargestellt sind. Bei diesen Softwaremitteln handelt es sich vorzugsweise um mobile Programmcodes, zweckmäßigerweise in Form von JAVA-Programmcodes, wobei z.B. in jeder Recheneinrichtung 13 und 14 jeweils ein Beobachtungs-Softwaremittel und ein Reaktions-Softwaremittel abgelegt ist. Die Beobachtungs-Softwaremittel dienen dazu, die zugeordnete Recheneinrichtung oder dieser zugeordnete Sensor- oder Aktormittel, die beispielsweise über die Recheneinrichtung gesteuert werden und mit dieser kommunizieren, zu überwachen und anhand der hierbei erfassten Daten Problemzustände zu erfassen, die einen nicht ordnungsgemäßen Betrieb der Anlage beziehungsweise eine nicht ordnungsgemäße Produktqualität entweder bereits anzeigen oder diese als in Kürze wahrscheinlich erscheinen lassen. Diese Fehler oder Ereignisse können dabei in Form von Überschreitungen von Grenzwerten oder Trends erfasst werden, ferner können Toleranzabweichungen von Prozessdaten (Bandprofilfehler, Temperaturfehler etc.) oder Besonderheiten im Konvergenzverhalten bei der Adaption von Modellen erfasst werden. Ein Beobachtungs-Softwaremittel ist bezüglich der von ihm vorzunehmenden Überwachungsaufgabe entsprechend konfiguriert. Stellt nun ein solches Beobachtungs-Softwaremittel einen Problemzustand fest, so werden die hierfür bereits vorhandenen Daten und gegebenenfalls weitere, einer Zustandsanalyse dienende Daten von den zugeordneten Sensor- oder Aktormitteln oder aber der Recheneinrichtung abgerufen und gesammelt und an die zentrale Recheneinrichtung 16 über den Datenbus 15 gegeben. Von dieser werden nun die gesammelten zustandspezifischen Daten an die externe Recheneinrichtung 18 gegeben, bei der es sich z.B. um ein Simulationssystems, ein Expertensystem oder eine sonstige Know-how-Quelle handelt. Dort werden die gegebenen Daten analysiert und der Problemlösung dienende Informationsdaten aus der Fülle der vorhandenen Know-how-Informationen erfasst oder entwickelt. Diese werden nun wiederum an die anlageneigene Recheneinrichtung 16 gegeben, von wo sie an ein ebenfalls nicht näher gezeigtes Reaktions-Softwaremittel, das beispielsweise an der gleichen Recheneinrichtung wie das auslösende Beobachtungs-Softwaremittel vorgesehen ist, gegeben. Dieses Reaktions-Softwaremittel analysiert nun die gegebenen, der Problemzustandslösung dienenden Informationsdaten und entscheidet aufgrund der ihm eigenen "Intelligenz", ob die Informationsdaten weiterverwendet werden und entsprechende Eingriffe, z.B. in den Anlagen- oder Steuerungsbetrieb, erforderlich sind, um den Prozess wieder zu beherrschen oder die Produktqualität wieder zu verbessern und Fehler auszugleichen, oder ob dies nicht unbedingt erforderlich ist.

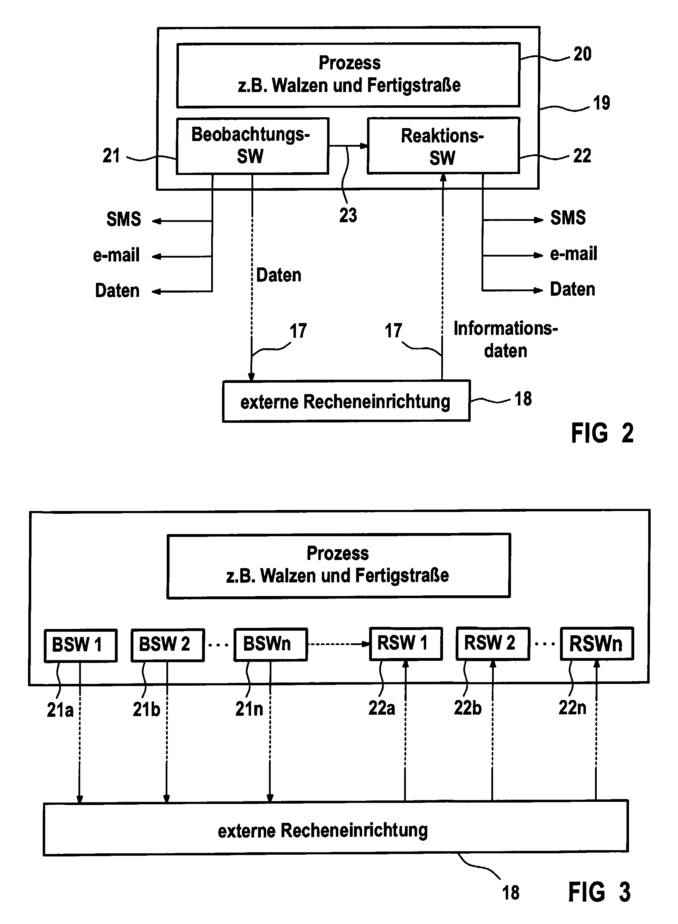

Fig. 2 zeigt in Form einer Prinzipskizze den Daten- und Kommunikationsverkehr nach einer ersten Erfindungsausgestaltung. Mit 19 ist der anlagenseitige Teil innerhalb des Kommunikationsschemas bezeichnet, bestehend aus dem mit 20 bezeichneten überwachten Prozess, z.B. dem Walzen in der Fertigstraße (Bezugszeichen c in Fig. 1). Mit 21 ist ein Beobachtungs-Softwaremittel und mit 22 ein Reaktions-Softwaremittel gekennzeichnet, wobei diese zumindest unidirektional kommunizieren (siehe den Pfeil 23). Stellt nun das Beobachtungs-Softwaremittel einen Problemzustand fest, so werden die diesbezüglich relevanten Betriebs- und/oder Produktdaten, also z.B. Informationen über die Breite oder Dicke oder das Profil des Bandes oder beispielsweise Bildaufnahmen des Gefüges etc. wie beschrieben über den in Fig. 1 gezeigten Kommunikationsweg an die externe Recheneinrichtung 18 gegeben, wo die Daten analysiert und Informationsdaten, die der Problemlösung dienen, ermittelt werden. Über die gleiche Kommunikationsstrecke, z.B. eine Internetverbindung 17, werden diese Informationsdaten an das Reaktions-Softwaremittel 22 gegeben, das nun auch auf Basis der ihm über die Kommunikationsverbindung 23 gelieferten Ursprungsdaten, die den Problemzustand beschreiben, überprüft und entscheidet, ob und wenn ja welche Handlung auf Basis der Informationsdaten erfolgen soll. Beispielsweise kann die Steuerung diverser Sensor- oder Aktormittel verändert werden, z.B. die Walzgeschwindigkeit oder die Walzkraft etc., auch kann der Datenerfassungs- oder Übertragungsbetrieb einer Recheneinrichtung, z.B. die zyklische Erfassung der der Beobachtungs-Software gegebenen Daten geändert werden, wenn das erfasste Problem darin seinen Ursprung hat etc. Generell kann jedweder Problemzustand erfasst werden, solange die hierfür ursächlichen Daten über ein geeignetes Beobachtungs-Softwaremittel 21 aufgenommen werden können.

Wie Fig. 2 zu entnehmen ist, ist sowohl das Beobachtungs-Softwaremittel 21 als auch das Reaktions-Softwaremittel 22 in der Lage, Informationsmitteilungen an eine externe Stelle oder an eine externe Person zusätzlich zur eigentlichen Datenübertragung beziehungsweise dem Datenempfang vorzunehmen oder anzustoßen. Z.B. können SMS-Mitteilungen oder e-Mail-Mitteilungen versand werden, auch besteht die Möglichkeit, die relevanten Daten an einen speziellen und hierfür vorgesehenen Ingenieurs-Arbeitsplatz zu versenden, was durch die entsprechenden Pfeile dargestellt ist.

Fig. 3 zeigt eine ähnliche Kommunikationsstruktur wie Fig. 2, jedoch sind hier mehrere Beobachtungs-Softwaremittel 21 a, 21 b,..., 21 n vorgesehen, die innerhalb des gezeigten Kommunikationsnetzwerks zwischen den Sensor- oder Aktormitteln 1 - 10 beziehungsweise den Recheneinrichtungen 13, 14 und gegebenenfalls 16 arbeiten und innerhalb dieses Netzwerks mobil sind. Jedem Beobachtungs-Softwaremittel liegt beispielsweise eine andere Überwachungsaufgabe zugrunde, auch ist es möglich, verschiedene Softwaremittel zur Überwachung des gleichen Systems zu verwenden, jedoch sind auch hier diesen Softwaremitteln unterschiedliche Überwachungsaufgaben zugeordnet oder eine hierarchische Strukturierung vorgesehen etc. Entsprechend sind im gezeigten Beispiel mehrere Reaktions-Softwaremittel 22 a, 22 b,..., 22 n vorgesehen, die ebenfalls unterschiedlichen Aufgaben dienen. Im gezeigten Beispiel kommuniziert jedes der Beobachtungs-Softwaremittel 21 a - n sowie jedes der Reaktions-Softwaremittel 22 a - 22 n mit der externen Recheneinrichtung 18. Die Recheneinrichtung 18 ist beispielsweise ihrerseits in der Lage, gezielt ein bestimmtes Reaktions-Softwaremittel anzusprechen, wenn allein dieses für die Problemlösung zuständig beziehungsweise ausgelegt ist.

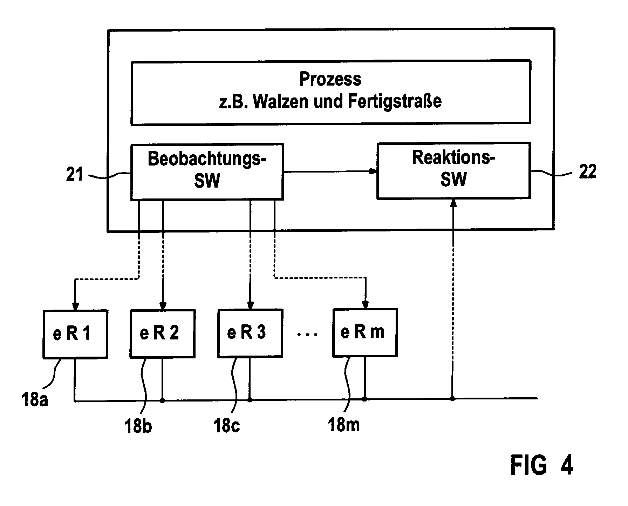

Fig. 4 zeigt eine weitere erfindungsgemäße Kommunikationsstruktur, wobei hier jeweils ein Beobachtungs-Softwaremittel 21 und ein Reaktions-Softwaremittel 22 vorgesehen ist. Diesen sind jedoch verschiedene externe Recheneinrichtungen 18 a, 18 b, 18 c,...,18 n zugeordnet. Bei diesen externen Recheneinrichtungen, die entweder zentral an einem Ort, über eine Internet-Verbindung zugänglich, vorgesehen sind, oder die dezentral verteilt positioniert sein können, handelt es sich beispielsweise um eine Simulationsrecheneinrichtung (z.B. die Recheneinrichtung 18 a), ein Expertensystem (z.B. die Recheneinrichtung 18 b) oder eine Vergleichsdatenbank (z.B. die Recheneinrichtung 18 c). Bei der externen Recheneinrichtung 18 n kann es sich z.B. um eine gewöhnliche Recheneinrichtung mit einem speziellen Softwaremittel zur Analyse von Metallgefügedaten handeln, welches Mittel die gelieferten Daten analysiert. In jedem Fall wird aufgrund der übertragenen Daten auch hier ein optimales Informationsdatenkonvolut zusammengestellt und an das Reaktions-Softwaremittel 22 gegeben.

Nachfolgend wird ein Beispiel für die Erfassung eines Problemzustandes bei einer Walzanlage gemäß Fig. 1 gegeben. Ausgangspunkt ist, dass drei separate Beobachtungs-Softwaremittel zu Überwachung einer bestimmten Aufgabe vorgesehen sind, denen auch verschiedene externe Recheneinrichtungen und damit Know-how-Quellen zugeordnet sind.

Das erste Beobachtungs-Softwaremittel beobachtet den Prozess und reagiert in definierten Situationen, wenn zum Beispiel die Haspeltemperatur kleiner als eine Mindesttemperatur ist. In diesem Fall erfolgt beispielsweise eine Informationsmitteilung per e-Mail an eine Qualitätsstelle und beispielsweise den Betriebsingenieur per SMS-Mitteilung. Sind bei Folgebändern systematische Fehler in der Haspeltemperatur gegeben, was ebenfalls durch dieses Softwaremittel erfasst wird, so erfolgt ebenfalls eine SMS-Informationsmitteilung an den Betriebsingenieur. Dieses Software-Mittel ist im Ausführungsbeispiel derart ausgelegt, dass ein solcher Zustand noch nicht als echter Problemzustand erkannt wird, der die Einbindung externen Know-how's zur Problemlösung erfordert.

Das zweite Beobachtungs-Softwaremittel beobachtet ebenfalls den Prozess und reagiert in definierten Situationen zum Beispiel dann, wenn ein Produkt wegen zu tiefer Haspeltemperatur abgewertet werden muss, es also qualitativ minderwertiger ist. In diesem Fall wird ein Problemzustand erkannt und die relevanten Prozessdaten werden an eine externe Recheneinrichtung, z.B. einen zentralen Server geschickt mit der Forderung zur Überprüfung der Zugfestigkeit und Streckgrenze des Materials.

Das dritte Beobachtungs-Softwaremittel beobachtet schließlich den Prozess und reagiert zum Beispiel dann, wenn ein Produkt dreimal nicht qualitätsgerecht produziert wurde. In diesem Fall werden die Prozessdaten an eine externe Recheneinrichtung geschickt, an der beispielsweise ein Gefügeexperte arbeitet, der ein Gefügebilde, das ebenfalls mit übertragen wurde, analysiert und Informationsdaten zur Problemlösung ermittelt.

Bei der externen Know-how-Quelle, die beispielsweise über das Beobachtungs-Softwaremittel 2 eingebunden wird, handelt es sich z.B. um einen Fliessschema-Simulator, der Prozesszustände (z.B. Walzkräfte) und Produktzustände (Temperatur, Geometrie, Zugfestigkeit, Streckgrenze) für einen ihm gegebenen Problemzustand, wie durch die übertragenen Daten definiert wird, in der Walzwerkstechnik berechnen und simulieren kann. Das Gefügeanalyse-Softwaremittel kann Analysen durchführen und auf diese Weise Informationsdaten für eine geänderte Prozessführung ermitteln.

## Patentansprüche

1. Verfahren zur Überwachung des Betriebs und/oder des Herstellungsprodukts einer industriellen Produktionsanlage, insbesondere einer Anlage der Grundstoffindustrie, unter Verwendung wenigstens eines Beobachtungs-Softwaremittels, mit folgenden Schritten:
- zyklische Erfassung relevanter Betriebs- und/oder Produktdaten mittels des ersten Beobachtungs-Softwaremittel und Verarbeitung der Daten zur Erkennung eines betriebs- und/oder produktrelevanten Problemzustands,
- bei Vorliegen eines Problemzustands Übertragung der relevanten und gegebenenfalls weiterer vom Beobachtungs-Softwaremittel dann zu erfassender Betriebs- und/oder Produktdaten an wenigstens eine als Informationsquelle dienende anlagenexterne Recheneinrichtung, die oder mittels welcher anhand der übertragenen Betriebs- und/oder Produktdaten zustandsbezogene Informationsdaten ermittelt oder ermittelt werden,
- Übertragung der zustandsbezogenen Informationsdaten an wenigstens ein Reaktions-Softwaremittel,
- Analyse der Informationsdaten durch das Reaktions-Softwaremittel und Durchführung eines vom Analyseergebnis abhängigen Eingriffs in den Betriebsablauf zur Behebung des betriebs- und/oder produktbezogenen Problemzustands durch das Reaktions-Softwaremittel.

2. Verfahren nach Anspruch 1, **dadurch gekennzeichnet, dass** eine oder mehrere den Betrieb der Produktionsanlage steuernde Recheneinrichtungen und/oder ein oder mehrere im Rahmen des Betriebs tätige Sensor- oder Aktormittel mit einem oder verschiedenen Beobachtungs-Softwaremitteln zur Erfassung betriebs- und/oder produktrelevanter Betriebs- und/oder Produktdaten überwacht werden.

3. Verfahren nach Anspruch 1 oder 2, **dadurch gekennzeichnet, dass** als Beobachtungs-Softwaremittel ein mobiler Programmcode verwendet wird.

4. Verfahren nach einem der vorangehenden Ansprüche, **dadurch gekennzeichnet, dass** das wenigstens ein Reaktions-Softwaremittel in den Steuerungsoder Arbeitsbetrieb wenigstens einer Recheneinrichtung und/oder den Betrieb wenigstens eines Sensor- oder Aktormittels eingreift.

5. Verfahren nach Anspruch 4, **dadurch gekennzeichnet, dass** mehrere verschiedene Reaktions-Softwaremittel verwendet werden, die separat mit Informationsdaten versorgt werden können.

6. Verfahren nach Anspruch 5, **dadurch gekennzeichnet, dass** jedem Reaktions-Softwaremittel ein oder mehrere bestimmte Recheneinrichtungen und/oder ein oder mehrere bestimmte Sensor- oder Aktormittel zugeordnet sind.

7. Verfahren nach einem der vorangehenden Ansprüche, **dadurch gekennzeichnet, dass** als Reaktions-Softwaremittel ein mobiler Programmcode verwendet wird.

8. Verfahren nach einem der vorangehenden Ansprüche, **dadurch gekennzeichnet, dass** der ermittelte Problemzustand und/oder die erfassten Betriebsund/oder Produktdaten zumindest zum Teil von einem Beobachtungs-Softwaremittel an ein Reaktions-Softwaremittel gegeben werden, das diese Daten im Rahmen der Analyse der Informationsdaten berücksichtigt.

9. Verfahren nach einem der vorangehenden Ansprüche, **dadurch gekennzeichnet, dass** die Ermittlung der Informationsdaten durch Durchführung von Simulationsrechnungen auf Basis der Betriebs- und/oder Produktdaten, durch Auswertung von Datenbankinformationen im Hinblick auf die Betriebs- und/oder Produktdaten, und/oder durch Analyse der Betriebs- und/oder Produktdaten mittels eines Expertensystems gewonnen werden.

10. Verfahren nach einem der vorangehenden Ansprüche, **dadurch gekennzeichnet, dass** mehrere verschiedene anlagenexterne Recheneinrichtungen verwendet werden.

11. Verfahren nach Anspruch 10, **dadurch gekennzeichnet, dass** ein Beobachtungs-Softwaremittel abhängig von dem Problemzustand und/oder den ermittelten Betriebs- und/oder Produktdaten eine oder mehrere anlagenexterne Recheneinrichtungen, an die die Betriebs- und/oder Produktdaten gegeben werden, auswählt.

12. Verfahren nach einem der vorangehenden Ansprüche, **dadurch gekennzeichnet, dass** über ein Beobachtungs-Softwaremittel die Gabe einer Informationsmitteilung an eine externe Stelle und/oder Person bei Vorliegen eines erfassten Problemzustands veranlasst wird.

13. Verfahren nach Anspruch 12, **dadurch gekennzeichnet, dass** die Informationsmitteilung in Form einer über eine Kommunikationsverbindung verschickten SMS-Mitteilung oder einer e-Mail-Mitteilung an ein entsprechendes Empfangsgerät erfolgt.

14. Verfahren nach einem der vorangehenden Ansprüche, **dadurch gekennzeichnet, dass** über ein Reaktions-Softwaremittel die Gabe einer Informationsmitteilung an eine externe Stelle und/oder Person bei Vorliegen der Informationsdaten und/oder der von einem Beobachtungs-Softwaremittel gelieferten Betriebs- und/oder Produktdaten veranlasst wird.

15. Verfahren nach Anspruch 14, **dadurch gekennzeichnet, dass** die Informationsmitteilung in Form einer über eine Kommunikationsverbindung verschickten SMS-Mitteilung oder einer e-Mail-Mitteilung an ein entsprechendes Empfangsgerät erfolgt.

16. Verfahren nach einem der vorangehenden Ansprüche, **dadurch gekennzeichnet, dass** die Kommunikation zwischen einem Beobachtungs-Softwaremittel und einer anlagenexternen Recheneinrichtung sowie zwischen einer anlagenexternen Recheneinrichtung und einem Reaktions-Softwaremittel über ein Intranet oder das Internet erfolgt.

17. Verfahren nach einem der vorangehenden Ansprüche, **dadurch gekennzeichnet, dass** die Informationsdaten von einer anlagenexternen Recheneinrichtung selbst ermittelt werden, oder dass die Informationsdaten von einer externen Person nach einer Analyse der der anlagenexternen Recheneinrichtung gegebenen Betriebs- und/oder Produktdaten dieser gegeben werden.

18. Verfahren nach einem der vorangehenden Ansprüche, **dadurch gekennzeichnet, dass** die von einem Beobachtungs-Softwaremittel zu übertragenden Betriebs- und/oder Produktdaten sowie die von einer anlagenexternen Recheneinrichtung zu übertragenden Informationsdaten verschlüsselt und empfängerseitig entschlüsselt werden.
